# EUROPÄISCHE PATENTSCHRIFT

(11) **EP 1 305 542 B1**
(45) Veröffentlichungstag und Bekanntmachung des Hinweises auf die Patenterteilung: **30.06.2004**
(21) Anmeldenummer: 01955379.1
(22) Anmeldetag: 28.07.2001
(51) Int. Cl.: F16H 61/22, F16H 63/48, B60T 1/00

(54) **PARKSPERRE, INSBESONDERE FÜR EIN KRAFTFAHRZEUGGETRIEBE**
PARKING BRAKE, ESPECIALLY FOR AN AUTOMOTIVE GEARBOX
DISPOSITIF DE BLOCAGE DE STATIONNEMENT, EN PARTICULIER POUR BOITE DE VITESSES DE VEHICULE AUTOMOBILE

(30) Priorität: 02.08.2000 DE 10037565
(43) Veröffentlichungstag der Anmeldung: 02.05.2003
(73) Patentinhaber: ZF FRIEDRICHSHAFEN Aktiengesellschaft, 88038 Friedrichshafen (DE)
(72) Erfinder: SCHMID, Wolfgang, 88085 Langenargen (DE)
(86) Internationale Anmeldenummer: PCT/EP2001/008770
(87) Internationale Veröffentlichungsnummer: WO 2002/010619

(56) Entgegenhaltungen:
- EP-A- 0 356 769
- DE-A- 4 322 523
- DE-A- 19 820 920
- DE-A- 19 834 156
- DE-A- 19 858 543

## Beschreibung

Die Erfindung betrifft eine Parksperre, insbesondere für ein Kraftfahrzeug-Automatgetriebe oder ein automatisiertes Kraftfahrzeug-Schaltgetriebe, nach dem Oberbegriff des Hauptanspruchs.

Üblicherweise weisen Automatgetriebe für Kraftfahrzeuge eine mechanisch wirkende Parksperreneinrichtung auf, bei der in Sperrstellung beispielsweise eine Sperrklinke in eine Verzahnung eines Parksperrenrades, das mit dem Abtrieb des Getriebes und somit mit einer Achse des Fahrzeugs verbunden ist, eingreift. Als Wirkverbindung zwischen Parksperre und deren Bedieneinrichtung im Innenraum des Kraftfahrzeugs sind mechanische und elektro-hydraulische Systeme bekannt. Mechanische Wirkverbindungen sind beispielsweise als Bowdenzug zwischen dem karosseriefesten Wählhebel und der am Automatgetriebe angeordneten elektro-hydraulischen Getriebesteuerung und der im Getriebegehäuse angeordneten Parksperrenbetätigung ausgeführt. Eine rein elektrische Wirkverbindung zwischen der Bedieneinrichtung des Automatgetriebes im Fahrzeug-Innenraum und der elektro-hydraulischen Getriebesteuerung bedingt eine Umsetzung des elektrischen Signals zur Parksperrenbetätigung in eine mechanische Bewegung der Sperrklinke. Wesentliche Vorteile der rein elektrisch ausgeführten Wirkverbindung zwischen der Bedieneinrichtung des Automatgetriebes und der elektro-hydraulischen Getriebesteuerung sind die akustische Entkoppelung der Bedieneinrichtung vom Antriebsstrang des Kraftfahrzeugs und die freie Wählbarkeit des Ortes der Bedieneinrichtung im Fahrzeug-Innenraum.

Die DE 43 22 523 A1 beispielsweise beschreibt eine elektro-hydraulische Steuereinrichtung für ein Kraftfahrzeug-Automatgetriebe mit einer elektrisch ausgeführten Wirkverbindung zwischen der Bedieneinrichtung des Automatgetriebes im Fahrzeuginnenraum und der elektro-hydraulischen Getriebesteuerung, bei der die Betriebsstufen D, R und N durch Druckbeaufschlagung einzelner Schaltglieder eingelegt werden, während die Betriebsstufe P durch Drucklosschaltung aller Schaltglieder eingelegt wird. Diese Anordnung führt dazu, daß nicht nur in der Betriebsstufe P, sondern in allen Betriebsstufen des Wählhebels bei Druckausfall die Parksperre eingelegt wird. Das Einlegen der Parksperre erfolgt dabei über einen Federspeicher, das Auslegen der Parksperre hydraulisch. Die Bereitstellung des zum Auslegen erforderlichen Druckes erfolgt über den Öldruckkreislauf des Automatgetriebes. Um bei Ausfall der elektrischen Spannungsversorgung oder einem Defekt im elektronischen Steuergerät des Automatgetriebes oder defekter Getriebeölversorgung die eingelegte Parksperre entriegeln zu können, ist zusätzlich eine Notentriegelungseinrichtung vorgesehen, mittels der die Parksperre mechanisch entriegelt werden kann.

Die DE 41 27 991 C2 beschreibt ebenfalls ein Parksperren-System für ein Kraftfahrzeug-Automatgetriebe mit einer elektrisch ausgeführten Wirkverbindung zwischen der Bedieneinrichtung des Automatgetriebes im Fahrzeuginnenraum und dem schaltbaren Parksperren-Mechanismus, bei dem die Parksperre über einen mechanischen Federspeicher eingelegt und über eine elektro-hydraulische Steuereinrichtung mit Überdruck ausgelegt wird. Hierzu ist die Betätigungsstange, mit der die Parksperre in Sperrstellung gebracht und aus der Sperrstellung gelöst wird, gleichzeitig als Kolbenstange für einen einfach wirkenden Zylinder ausgebildet. Zum Auslegen der Parksperre und zum Halten der Parksperre im ausgelegten Zustand wird der Zylinder über ein Magnetventil mit Drucköl beaufschlagt. Die hydraulische Druckversorgung hierzu erfolgt vorzugsweise direkt über den Druckölkreislauf des Automatgetriebes, der auch die hydraulische Getriebesteuerung mit Drucköl versorgt. In Wählhebeposition P ist das Magnetventil in Sperrstellung und der Zylinder entlüftet. Im drucklosen Zustand schiebt der Zylinder die Parksperre durch die Federkraft des Federspeichers in Sperrstellung. In einer Ausgestaltung wird vorgeschlagen, zusätzlich einen Überdruckspeicher mit Absperrventil vorzusehen, um die Parksperre in einem begrenzten Zeitraum bei stehendem Motor und damit fehlendem Pumpendruck im ausgelegten Zustand halten zu können.

Die gattungsmäßige DE 198 34 156 A1 schließlich beschreibt ein Parksperren-System für ein Kraftfahrzeug-Automatgetriebe, bei dem die Parksperrenklinke infolge Verschieben durch einen Federspeicher einrastet und durch hydraulischen Druck, der über den Öldruckkreislauf des Automatgetriebes bereitgestellt wird, bei gleichzeitiger Vorspannung des Federspeichers entriegelt wird. Zur Verhinderung eines ungewollten Einrastens der Parksperre bei abgeschaltetem Hydraulikdruck ist eine mechanische Kugelverriegelung der hydraulischen Parksperren-Betätigungseinrichtung vorgesehen. Die Kugel-Verriegelung wird über einen Elektromagneten betätigt, indem ein Betätigungsbolzen infolge Bestromung des Elektromagneten linear verschoben wird und dabei die Kugeln über einen kegeligen Durchmesser des Betätigungsbolzens in Verriegelungsposition bringt. Solange, wie der Elektromagnet bestromt ist, wird die Kugel-Verriegelung in Verriegelungsstellung gehalten, sodaß die Parksperre in Entriegelungsstellung verbleibt. Der solchermaßen wirkende Verriegelungsmechanismus benötigt gegenüber der sonst aufzubringenden Gegenkraft zum Federspeicher eine nur relativ geringe Betätigungskraft für die lineare Bewegung des Betätigungsbolzens, die von dem Elektromagnet aufgebracht werden muß. Die Haltekraft der Kugel-Verriegelung, die ebenfalls von dem Elektromagneten aufgebracht werden muß, ist gering. Auslegungskriterium für den Elektromagneten sind also die erforderliche Anzugskraft zur Betätigung des Sperrmechanismusses, der Betätigungsweg und die erforderliche Haltkraft. Bei einem Verriegelungsmechanismus gemäß der DE 198 34 156 A1 beträgt der Betätigungsweg mindestens 3 mm. Da bekanntlich die Anzugskraft eines Elektromagneten mit zunehmendem Abstand von ihm stark abnimmt, muß der Elektromagnet bei einem relativ großen Betätigungsweg des Verriegelungsmechanismusses entsprechend groß dimensioniert werden. Hierdurch können sich Bauraumprobleme ergeben, aber auch eine unerwünscht große Leistungsaufnahme des Elektromagneten, die in dessen geschaltetetem Zustand - in der Regel von der elekronischen Getriebesteuerung - aufgebracht werden muß.

Der vorliegenden Erfindung liegt daher die Aufgabe zugrunde, eine elektro-hydraulisch gesteuerte Parksperre nach dem gattungsgemäßen Stand der Technik hinsichtlich Minimierung von aufzubringender elektrischer Leistung und Bauraum der Parksperren-Betätigungseinrichtung weiterzuentwickeln.

Erfindungsgemäß gelöst wird die Aufgabe mit einer die Merkmale des Hauptanspruchs aufweisende Parksperre. Weitere vorteilhafte Ausgestaltungen der Erfindung ergeben sich aus den Unteransprüchen.

Die Erfindung geht von einem bekannten Parksperren-System aus, bei dem eine Parksperren-Sperrklinke zum Blockieren eines Getriebes hydraulisch ausgerastet wird, wobei die dafür erforderliche hydraulische Energie vorzugsweise von einer elektro-hydraulischen Steuereinheit des Getriebes bereitgestellt wird. Ein bevorzugtes Betätigungselement der Auslegevorrichtung der Parksperre ist ein hydraulisch betätigbarer Zylinder, der mit der Parksperren-Sperrklinke in mechanischer Wirkverbindung steht. Gleichzeitig mit dem Ausrasten der Parksperren-Sperrklinke wird ein Federspeicher vorgespannt, über dessen Federkraft die Parksperre bei einer Drucklosschaltung der hydraulischen Auslege-Vorrichtung einrastet. Die ausgerastete Parksperren-Sperrklinke wird in bekannter Weise über eine mechanische Verriegelung im Ausrastzustand durch einen in diesem Zustand bestromten Elektromagneten gehalten.

Erfindungsgemäß wird nun eine mechanische Betätigung der Verriegelung des Parksperren-Systems zum Halten der Parksperre im nicht-sperrenden Zustand vorgeschlagen. Die Verriegelung wird dabei durch die Sperreinrichtung der Parksperre bei derem Lösen aus der Sperrstellung betätigt. Ein bestromter Elektromagnet hält die Verriegelungseinrichtung zum Halten der Parksperre im nicht-sperrenden Zustand in Verriegelungsstellung. Die Sperreinrichtung, insbesondere die Parksperren-Sperrklinke, hat also eine mechanische Wirkverbindung zur Verriegelungseinrichtung, beispielsweise über eine bekannte Rastenscheibe des Parksperrensystems.

Bei ausgelegter Parksperre bewirkt das Prinzip der mechanischen Verriegelung der Parksperren-Sperreinrichtung in Verbindung mit dem Elektromagnet zum Halten der Verriegelung in Verriegelungsstellung in bekannter Weise, daß der Elektromagnet nicht die volle Gegenkraft zu den überwiegend vom Federspeicher bestimmten Parksperren-Einlegekräfte aufbringen muß, sondern nur die Haltekräfte der Sperrelemente. Der erfindungsgemäße mechanische Anzug der Verriegelung bewirkt nun, daß der Elektromagnet keinerlei Betätigungskräfte aufbringen muß und nur noch eine reine Haltefunktion hat. Somit braucht der Elektromagnet konstruktiv nur auf die Haltekräfte hin ausgelegt werden, entsprechend gering sind dessen elektrische Leistungsdaten und dessen Baugröße.

In einer Ausgestaltung der Erfindung wird vorgeschlagen, die Verriegelungseinrichtung zum Halten der Parksperre im nicht-sperrenden Zustand gleichzeitig mechanisch und elektromagnetisch zu betätigen. Ausgehend vom gattungsgemäßen Stand der Technik der DE 198 34 156 A1 ergibt sich hierdurch eine mechanische Anzugsunterstützung des Elektromagneten, wobei die mechanisch aufzubringenden Kräfte zum Betätigen der Verriegelungseinrichtung betätigungswegabhängig um die elektromagnetische Anzugskraft reduziert werden. Entsprechend geringer sind die erforderliche elektrische Leistung bei der Betätigung des Elektromagneten und dessen Bauraumbedarf.

Ein bevorzugtes Prinzip der mechanischen Verriegelung der Parksperre ist die aus der DE 198 34 156 A1 bekannte Verriegelung mittels Kugeln, bei dem ein speziell ausgebildeter Betätigungsbolzen beim Bestromen eines Elektromagneten mit Betätigungs- und Haltefunktion linear verschoben wird und dabei Kugeln über einen kegelig ausgebildeten Abschnitt des Betätigungsbolzens mechanisch in eine Verriegelungsposition bringt. In dieser Verriegelungsposition stellen die Kugeln einen Formschluß zwischen dem Betätigungselement der Parksperren-Auslegevorrichtung, beispielsweise dem Kolben eines hydraulisch oder pneumatisch betätigbaren Zylinders, und einem feststehenden Teil des Federspeichers her. Auf diese Weise ist das Betätigungselement der Parksperren-Auslegevorrichtung mechanisch blockiert, solange der Betätigungsbolzen der Verriegelungseinrichtung von dem bestromten Elekromagneten in der Verriegelungsposition gehalten wird.

Ein bevorzugtes Ausführungsbeispiel der Erfindung ist in der nachfolgende Beschreibung mit der zugehörigen Zeichnung dargestellt.

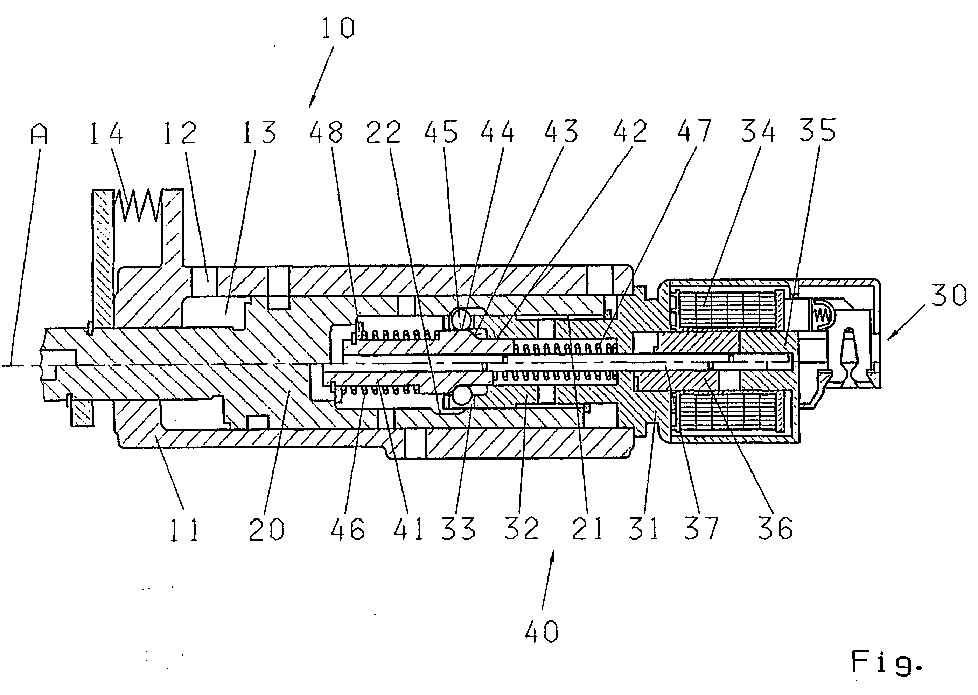

Die einzige Figur zeigt einen Federspeicher 10 für eine elekrohydraulisch betätigbare Parksperre, insbesondere eines Kraftfahrzeug-Automatgetriebe oder eines automatierten Kraftfahrzeug-Schaltgetriebes. Oberhalb der Mittellinie A ist der Federspeicher 10 dabei im verriegelten Zustand bei ausgelegter Parksperre dargestellt, unterhalb der Mittellinie A entsprechend im entspannten Zustand bei eingelegter Parksperre. In einem feststehenden Teil 11 des Federspeichers 10 ist ein axial beweglicher Kolben 20 angeordnet, der mit einer nicht näher dargestellten Sperreinrichtung der Parksperre mechanisch verbunden ist. Beispielsweise ist die Sperreinrichtung als eine Sperrklinke ausgebildet, die in eine Zahnlücke eines Parksperrenrades eingreifen kann, das auf eine Abtriebswelle des Getriebes wirkt. Der Kolben 20 ist über eine Steueröffnung 12 im festehenden Teil 11 und einen Druckraum 13 mit Druck beaufschlagbar. In bekannter Weise bewirkt eine solche hydraulische oder pneumatische Druckbeaufschlagung, daß der Kolben 20 axial verfährt und dabei die Sperreinrichung der Parksperre gegen die Federkraft einer Parksperrenfeder aus der Sperrstellung löst. Gleichzeitig wird durch die axiale Bewegung des Kolbens 20 die Parksperrenfeder 14 vorgespannt, über deren Federkraft die Sperreinrichtung der Parksperre bei einer Druckloschaltung des Druckraums 13 wieder in Sperrstellung gebracht wird.

An einer Stirnseite des feststehenden Teils 11 des Federspeichers 10 ist ein bestrombarer Elektromagnet 30 angeordnet und mit ihm fest verbunden. Der Elektromagnet 30 besteht im wesentlichen aus einem Gehäuse 31 mit einer rohrförmig ausgebildenen Gehäuseverlängerung 32, einer bestrombaren Spule 34, einem Haltemagnet 35, einem axial verschiebbaren Anker 36 und einer mit dem Anker 36 fest verbundenen Ankerstange 37.

Mit 40 ist eine Verriegelungseinrichtung bezeichnet, die erfindungsgemäß mechanisch in Verriegelungsstellung gebracht und von dem bestromten Elektromagneten 30 in Verriegelungsstellung gehalten wird. Eine oder vorteilhafterweise mehrere Rastierkugeln 45 sind als Verriegelungsmittel radial verschiebbar in einer Ausnehmung 33 der Gehäuseverlängerung 32 des Elektromagneten 30 angeordnet. Selbstverständlich können auch Verriegelungsmittel anderer Geometrie verwendet werden.

Die Verriegelungseinrichtung weist einen Spreizkonus 41 auf, der mit der Ankerstange 36 auf deren dem Haltemagneten 35 abgewandten Seite fest verbunden ist. Der Spreizkonus 41 weist drei Funktionsflächen 42, 43 und 44 auf, die mit den Rastierkugeln 45 in Wirkverbindung stehen. Der Spreizkonus 41 ist axial verschiebbar zwischen einer Betätigungsfeder 46, die sich über eine Scheibe 48 axial gegen den Kolben 20 abstützt, und einer Rückstellfeder 47, die sich an dem feststehenden Teil 11 des Federspeichers 10 abstützt, eingespannt. Diese Konfiguration ermöglicht einen mechanischen Toleranzausgleich zwischen der mechanischen Betätigung und der elektromagnetischen Halteeinrichtung der Verriegelungseinrichtung 40.

Ist die Parksperre eingelegt, befindet sich der Kolben 20 im ausgefahrener Lage, wie in der Figur unterhalb der Mittellinie A dargestellt. Betätigungsfeder 46 und Rückstellfeder 47 des Spreizkonus 41 sind entspannt. In einer anderen Ausführungsform können Betätigungsfeder 46 und Rückstellfeder 47 auch leicht vorgespannt sein. Die Rastierkugeln 45 befinden sich im Bereich der ersten, zylindrisch ausgebildeten Funktionsfläche 42 des Spreizkonus 41. Soll nun die Parksperre ausgelegt werden, so wird der Druckraum 13 befüllt, und der Kolben 20 fährt axial in Richtung des Elektromagneten 30 bis in die Endlage, die in der Figur oberhalb der Mittellinie A dargestellt ist. Zum Ausgleich von Bauteiltoleranzen ist im Ausführungsbeispiel in vorteilhafter Weise ein geringes Axialspiel zwischen dem Kolben 20 und dem Spreizkonus 41 vorgesehen. Der Kolben 20 muß also am Anfang des Auslegens der Parksperre zuerst einen geringen Totweg zurücklegen, bevor er den Spreizkonus 41 und damit den Anker 36 in Richtung des Haltemagneten 35 verschiebt. In einer anderen Ausführungsform kann auch vorgesehen sein, daß eine Bewegung des Kolbens 20 in Richtung des Elekromagneten 30 unmittelbar die erfindungsgemäße mechanische Betätigung der Verriegelungseinrichtung 40 zur Folge hat.

Beim Auslegen der Parksperre wird die Verriegelungseinrichtung nun durch den druckbeaufschlagten Kolben 20 mechanisch betätigt. Die Kraftübertragung erfolgt dabei vom Kolben 20 über die Scheibe 48 auf die Betätigungsfeder 46, gegen deren Federkraft auf eine Fläche des Spreizkonus 41, der sich über die Rückstellfeder 47 am feststehenden Teil 11 des Federspeichers 10 absützt. Der Spreizkonus 41 wird also gegen die Federkräfte von Vorspannfeder 46 und Rückstellfeder 47 axial in Richtung Elektromagnet 30 geschoben. Dabei werden die Rastierkugeln 45 über die zweite, kegelig ausgebildete Funktionsfäche 43 des Spreizkonus 41 in ihrer radialen Ausnehmung 33 der Elekromagnetgehäuseverlängerung 32 nach außen gedrückt und greifen hierbei in eine Kolbenausnehmung 22 ein. Die Kolbenausnehmung 22 ist zweckmäßigerweise derart dimensioniert, daß eine geringe axiale Bewegung der Rastierkugeln 45 in ihr möglich ist, beispielsweise 2 mm. Anschließend liegen die Rastierkugeln 45 dann im Bereich der dritten, zylindrisch ausgebildeten Funktionsfläche 44 des Spreizkonus 41, auf einem gegenüber der erste Funktionsfläche 42 größerem Durchmesser, in der Kolbenausnehmung 22. Durch die radiale Fixierung der Rastierkugeln 45 in der Gehäuseverlängerung 32 des Elektromagneten 30 besteht ein Formschluß zwischen dem Kolben 20 und dem feststehenden Teil 11 des Federspeichers 10 über das mit diesem verbundenen Elektromagnetgehäuse 31.

In einer anderen Ausführungsform des Spreizkonus 41 kann vorgesehen sein, daß die Funktionsfläche 44 leicht konisch ausgebildet ist, mit dem kleineren Konusdurchmesser zur Funktionsfläche 43 hin gerichtet. In vorteilhafter Weise kann hierdurch das Entriegeln der Verriegelungseinrichtung 40 erleichtert werden.

In der Endlage liegt der fest mit dem Spreizkonus 41 verbundenen Anker 36 an dem Haltemagneten 35 an. Ein üblicher Verfahrweg des Kolbens 20 von der Blockierstellung der Parksperre bis zur Endlage des Ankers 36 beträgt etwa 3 bis 5 mm. Der Elektromagent 30 übt nun seine Haltefunktion der Verriegelungseinrichtung 30 aus. Solange, wie die Spule 34 bestromt ist, hält die elektromagnetische Kraft den Anker 36 an dem Haltemagneten 35 gegen die Rückstellkräfte des Spreizkonus 41, die im wesentlichen durch die Rückstellfeder 47 und die Betätigungsfeder 46 bestimmt sind. Die erforderliche Haltekraft ist gering und entsprechend niedrig die zur Aufrechterhaltung der Haltefunktion erforderliche elektrische Energie. Der so nur auf eine reine Haltefunktion hin ausgelegte Elektromagnet 30 benötigt auch nur geringen Bauraum.

Im Ausführungsbeispiel der Erfindung ist in Vorteilhafter Weise zum Ausgleich von Toleranzen ein über den Endanschlag des Ankers 36 am Haltemagneten 35 hinaus reichender geringer Verfahrweg des Kolbens 20 möglich, wobei die Betätigungsfeder 46 leicht überdrückt wird. Da die aus der Überdrückung der Betätigungsfeder 46 resultierende Federkraft der Federkraft der Rückstellfeder 47 entgegenwirkt, wird die erforderliche Haltekraft des Elektromagneten 30 bzw. des Haltemagneten 35 weiter reduziert wird, solange der Kolben 20 mit Druck beaufschlagt ist.

Soll nun die Parksperre eingelegt, d.h. die Sperreinrichtung der Parksperre in Sperrstellung gebracht werden, so wird der Druckraum 13 in bekannter Weise entlüftet. Infolge der Federkraft der Parksperrenfeder 14 fährt der Kolben 20 soweit zurück, d.h. weg vom Elektromagnet, bis er von den Rastierkugeln 45, die noch in der Kolbenausnehmung 22 liegen, gehalten wird. Üblicherweise beträgt dieser Weg etwa 2 bis 3 mm, abhängig von der Bauteilgeometrie. In dieser Stellung des Kolbens 20 ist die Betätigungsfeder 46 vorzugsweise entspannt. Wird nun der zuvor noch bestromte Elekromagnet 30 elektrisch abgeschaltet, drückt die Federkraft der Rückstellfeder 47 den Spreizkonus 41 zurück, die Federkraft der Parksperrenfeder 14 zieht den Kolben 20 weiter, wobei die Rastierkugeln 45 entlang der zweiten, konischen Funktionsfläche 43 wieder auf den kleinen Durchmesser der ersten, zylindrischen Funktionsfläche 42 des Spreizkonus 41 gebracht werden, und die Parksperre gelangt in Sperrstellung.

Im dargestellten Ausführungsbeispiel der Erfindung sind die Komponenten der Verriegelungseinrichtung 40 zur Einsparung von Baulänge in vorteilhafter Weise ineinander geschachtelt in einer Längsbohrung 21 des Kolbens 20 angeordnet. Die rohrförmige Gehäuseverlängerung 32 des Elektromagneten 30 ragt ebenfalls in die Kolbenlängsbohrung 21 hinein und übernimmt die Aufgabe der Führung von Ankerstange 37 und Spreizkonus 41, sowie die Aufnahme und radiale Führung der Rastierkugeln 45. Selbstverständlich sind auch andere räumlich Bauteilanordnungen mit gleicher funktionellen Wirkung einsetzbar, wobei die Verriegelungseinrichtung 40 zumindest teilweise in der Längsbohrung 21 des Kolbens 20 angeordnet ist.

Die zum Auslegen der Parksperre und zum Vorspannen des Federspeichers 10 sowie zur mechanischen Betätigung der Verriegelungseinrichtung 40 erforderliche hydraulische oder pneumatische Energie kann vorzugsweise der bei einem Automatgetriebe oder automatisierten Schaltgetriebe üblicherweise vorhandenen hydraulischen bzw. pneumatischen Getriebesteuerung entnommen werden. Einsetzbar sind jedoch auch speziell für die Parksperrenbetätigung hin konzipierte Druckversorgungseinrichtungen.

Der Einsatz der erfindungsgemäßen Parksperre ist nicht beschränkt auf Automatgetriebe oder automatisierte Schaltgetriebe für Kraftfahrzeuge. Sie kann auch für sonstige Antriebe und Antriebskomponenten eingesetzt werden, bei denen zumindest ein rotierendes oder ein sich linear bewegendes Antriebselement durch eine Parksperre blockiert werden soll, über eine elektro-hydraulische oder elektropneumatische Wirkverbindung zwischen einer Bedieneinrichtung und einer Sperreinrichtung der Parksperre. Anwendungsbeispiele, bei denen ein drehbares Antriebselement durch eine Parksperre blockiert werden kann, sind Motore, Getriebe, Triebköpfe, Achsen und Achsantriebe für Fahrzeuge aller Art, Seilbahnen, Transporteinrichtungen, Fließbänder, Seilwinden, Bearbeitungsmaschinen usw.. Anwendungen, bei denen ein linear wirkendes Antriebselement eine Parksperre aufweisen kann, finden sich beispielsweise in der Automatisierungstechnik.

### Bezugszeichen

- 10: Federspeicher
- 11: feststehender Teil des Federspeichers
- 12: Steueröffnung
- 13: Druckraum
- 14: Parksperrenfeder

- 20: Kolben
- 21: Längsbohrung des Kolbens
- 22: Kolbenausnehmung

- 30: Elektromagnet
- 31: Gehäuse des Elektromagneten
- 32: rohrförmige Gehäusesverlängerung
- 33: Gehäuseausnehmung
- 34: bestrombare Spule
- 35: Haltemagnet
- 36: Anker
- 37: Ankerstange

- 40: Verriegelungseinrichtung
- 41: Spreizkonus
- 42: erste zylindrische Funktionsfläche
- 43: zweite konische Funktionsfläche
- 44: dritte zylindrische Funktionsfläche
- 45: Rastierkugel
- 46: Betätigungsfeder
- 47: Rückstellfeder
- 48: Scheibe

- A: Mittellinie

## Patentansprüche

1. Parksperre für einen Antrieb, insbesondere für automatische oder automatisierte Getriebe von Kraftfahrzeugen,
mit einer Sperreinrichtung, die aufgrund eines über eine Bedieneinrichtung ausgelösten Betätigungssignals den Antrieb blockiert bzw. freigibt,
wobei die Sperreinrichtung durch Betätigung eines Federspeichers (10) in Sperrstellung gebracht wird und die Sperreinrichtung über hydraulischen oder pneumatischen Druck aus der Sperrstellung gelöst wird bei gleichzeitigem Vorspannen des Federspeichers (10),
mit einer mechanisch wirkenden Verriegelungseinrichtung (40) zum Halten der Sperreinrichtung im nicht-sperrenden Zustand,
und mit einem bestrombaren Elektromagneten (30) zum Halten der Verriegelungseinrichtung (40) in Verriegelungsstellung,
wobei die Verriegelungseinrichtung (40) als Kugel-/Konus-System ausgebildet ist mit einem mit dem Elektromagneten (30) verbundenen Spreizkonus (41) und mindestens einer Rastierkugel (45) als Rastiermittel,
**dadurch gekennzeichnet, daß** der Spreizkonus (41) der Verriegelungseinrichtung (40) mechanisch durch die Sperreinrichtung beim Lösen deren Sperrstellung betätigt und hierdurch die Verriegelungseinrichtung (40) in Sperrstellung gebracht wird.

2. Parksperre nach Anspruch 1, **dadurch gekennzeichnet, daß** die Verriegelungseinrichtung (40) in Verriegelungsstellung den Federspeicher (10) sowohl im druckbeaufschlagten als auch im drucklosen Zustand in solange einer Stellung hält, in der die Parksperre ausgerastet ist, bis der Elektromagnet (30) stromlos geschaltet und dabei die Verriegelung entriegelt wird.

3. Parksperre nach Anspruch 1 oder 2, **dadurch gekennzeichnet, daß** die Verriegelungseinrichtung (40) gleichzeitig mechanisch durch die Sperreinrichtung beim Lösen deren Sperrstellung und elektromagnetisch durch Bestromen des Elektromagneten (30) betätigt wird, wobei die Verriegelung durch den bestromten Elektromagneten (30) gehalten und so lange aufrechterhalten wird, bis dieser stromlos geschaltet wird.

4. Parksperre nach Anspruch 1, 2 oder 3, **dadurch gekennzeichnet, daß** die Verriegelungseinrichtung (40) einen mechanisch wirkenden Toleranzausgleich aufweist, der Toleranzen von Bauteilen zur mechanischen Betätigung und zum elektromagnetischen Halten der Verriegelungseinrichtung (40) berücksichtigt.

5. Parksperre nach einem der Ansprüche 1 bis 4, **dadurch gekennzeichnet,**
**daß** der Spreizkonus (41) der Verriegelungseinrichtung (40) linear verschiebbar zwischen einer Betätigungsfeder (46), die sich axial gegen einen zum Lösen der Sperreinrichtung hydraulisch oder pneumatisch ansteuerbaren Kolben (20) abstützt, und einer Rückstellfeder (47), die sich an einem feststehenden Teil (11) des Federspeichers (10) axial abstützt, eingespannt ist,
**daß** der Spreizkonus (41) eine erste zylindrisch ausgebildete Funktionsfläche (42), angrenzend eine zweite konisch ausgebildete Funktionsfläche (43) und abgrenzend eine dritte, zumindest annähernd zylindrisch ausgebildete Funktionsfläche (44) mit größerem Durchmesser als die erste Funktionsfläche (42) aufweist,
**daß** der Spreizkonus (41) mit einen Anker (36) des Elektromagneten (30) fest verbunden ist,
**daß** die Rastierkugel (45) der Verriegelungseinrichtung (40) in Bezug zum Spreizkonus (41) radial verschiebbar sind zum Verriegeln der Sperreinrichtung im nicht-sperrenden Zustand,
**daß** der Kolben (20) beim Lösen der Sperreinrichtung aus derem sperrenden Zustand den Spreizkonus (41) mechanisch in Richtung des Elektromagneten (30) schiebt, bis zu einer Endlage, in der der Anker (36) an einem Haltemagneten (35) des Elektromagneten (30) zumindest annähernd anliegt,
wobei der Spreizkonus (41) die Rastiermittel über die drei Funktionsflächen (42, 43, 44) des Spreizkonus (41) nach außen in eine Kolbenausnehmung (22) in Verriegelungstellung bringt, derart, daß zwischen dem Kolben (20) und einem feststehenden Teil (11) des Federspeichers (10) Formschluß besteht.

6. Parksperre nach Anspruch 5, **dadurch gekennzeichnet, daß** die dritte Funktionsfläche (44) des Spreizkonus (41) konisch ausgebildet ist, mit einem kleineren Durchmesser, der zur zweiten Funktionsfläche (43) hin gerichtet ist, und mit einem größeren Durchmesser, der nur wenig größer ist als der kleinere Durchmesser.

7. Parksperre nach Anspruch 4, 5 und 6, **dadurch gekennzeichnet, daß** der Kolben (20) beim Lösen der Sperreinrichtung aus derem Sperrzustand einen größeren axialen Verfahrweg hat als der Spreizkonus (41) bis zum Erreichen der Endlage des Ankers (36).

8. Parksperre nach einem der vorigen Ansprüche, **dadurch gekennzeichnet, daß** die Verriegelungseinrichtung (40) innerhalb einer Längsbohrung (21) des Kolben (20) angeordnet sind.

9. Parksperre nach einem der vorigen Ansprüche, **dadurch gekennzeichnet, daß** der Elektromagnet (30) während der mechanischen Betätigung der Verriegelungseinrichtung (40) elektrisch bestromt wird.

## Claims

1. Parking brake for a drive gear, in particular for automatic or automated transmissions of motor vehicles, featuring a blocking element which blocks or releases the drive gear in response to an actuating signal triggered by a control unit, with the blocking element being brought into blocking position through the actuation of a spring-type actuator (10) and with the blocking element being released from the blocking position through hydraulic or pneumatic pressure, with simultaneous preloading of the spring-type actuator (10);
featuring a mechanically acting locking device (40) for holding the blocking element in the non-blocking condition; and featuring a powered electromagnet (30) for holding the locking device (40) in the locking position, with the locking device (40) being designed as a ball / cone system comprising an expanding cone (41) linked to the electromagnet (30) and at least one locking ball (45) as locking element, **characterized in that** the expanding cone (41) of the locking device (40) is mechanically actuated by the blocking element being released from its blocking position and in the process the locking device (40) is put into its locking position.

2. Parking brake according to claim 1, **characterized in that** the locking device (40) in locking position holds the spring-type actuator (10) in its pressurized or its unpressurized condition in a position in which the parking lock is not engaged until the electromagnet (30) is de-energized and in the process the lock is released.

3. Parking brake according to claim 1 or 2, **characterized in that** the locking device (40) is simultaneously actuated - mechanically by the blocking element being released from its blocking position and electromagnetically by the energized electromagnet (30) - , with the lock produced by the energized electromagnet (30) being maintained until it is de-energized.

4. Parking brake according to claim 1, 2 or 3, **characterized in that** the locking device (40) features a mechanically acting tolerance compensation taking into account the tolerances of components for mechanical actuation or electromagnetic locking of the locking device (40).

5. Parking brake according to one of the claims 1 through 4, **characterized in that** the expanding cone (41) of the locking device (40) is clamped in a linearly displaceable position between an actuating spring (46) - which is axially supported by a piston (20) being hydraulically or pneumatically controllable to release the blocking element -, and a return spring (47), which is axially supported on a fixed part (11) of the spring-type actuator (10); further **characterized in that** the expanding cone (41) features a first cylindrical functional surface (42), adjacent to it a second conical functional surface (43) and a final third approximately cylindrical functional surface (44) with a larger diameter than that of the first functional surface (42); that the expanding cone (41) is firmly linked to an armature (36) of the electromagnet (30); that the locking ball (45) of the locking device (40) is radially displaceable relative to the expanding cone (41) to lock the blocking device in the non-blocking condition; that the piston (20) while releasing the blocking device from its blocking condition mechanically pushes the expanding cone (41) towards the electromagnet (30) until it reaches a position in which the armature (36) nearly abuts on a no-work magnet (35) of the electromagnet (30), with the expanding cone (41) bringing the locking means into locking position in an external piston recess (22) via the three functional surfaces (42, 43, 44) of the expanding cone (41), in such a way that positive engagement is brought about between the piston (20) and a fixed part (11 ) of the spring-type actuator (10).

6. Parking brake according to claim 5, **characterized in that** the third functional surface (44) of the expanding cone (41) is of conical design, with a smaller diameter facing the second functional surface (43) and with a diameter that is only marginally larger than the smaller diameter.

7. Parking brake according to claims 4, 5 and 6, **characterized in that** the piston (20) releasing the blocking device from its blocking condition has a larger axial displacement that the expanding cone (41) before it reaches the end position of the armature (36).

8. Parking brake according to one of the preceding claims, **characterized in that** the locking device (40) is arranged within a longitudinal bore (21) of the piston (20).

9. Parking brake according to one of the preceding claims, **characterized in that** the electromagnet (30) is electrically energized during mechanical actuation of the locking device (40).

## Revendications

1. Frein de stationnement pour un entraînement, plus particulièrement pour des transmissions automatiques ou automatisées de véhicules automobiles
avec un dispositif de freinage qui bloque ou libère l'entraînement grâce à un signal d'actionnement déclenché par l'intermédiaire d'un dispositif de commande,
le dispositif de freinage étant amené dans la position de freinage par l'actionnement d'un accumulateur à ressort (10) et le dispositif de freinage étant relâché de la position de freinage par l'intermédiaire d'une pression hydraulique ou pneumatique, avec une tension simultanée de l'accumulateur à ressort (10),
avec un dispositif de verrouillage mécanique (40) pour le maintien du dispositif de freinage dans l'état non freinant,
et avec un électro-aimant (30) pouvant être alimenté en courant pour maintenir le dispositif de verrouillage (40) dans la position de verrouillage, le dispositif de verrouillage (40) étant conçu comme un système bille/cône avec . un cône d'expansion (41) relié à l'électro-aimant (30) et au moins une bille d'encliquetage (45) comme moyen d'encliquetage,
**caractérisé en ce que** le cône d'expansion (41) du dispositif de verrouillage (40) est actionné mécaniquement par le dispositif de freinage lors du relâchement de sa position de freinage et le dispositif de verrouillage (40) est ainsi amené dans la position de freinage.

2. Frein de stationnement selon la revendication 1,**caractérisé en ce que** le dispositif de verrouillage (40), dans la position de verrouillage, maintient l'accumulateur à ressort (10) aussi bien dans l'état pressurisé que dans l'état sans pression, dans une position dans laquelle le frein de stationnement est désengagé, jusqu'à ce que l'électro-aimant (30) soit sans courant et jusqu'à ce que le verrouillage soit déverrouillé.

3. Frein de stationnement selon la revendication 1 ou 2, **caractérisé en ce que** le dispositif de verrouillage (40) est actionné simultanément mécaniquement par le dispositif de freinage lors du relâchement de sa position de freinage et électromagnétiquement par l'alimentation en courant de l'électro-aimant (30), le verrouillage étant effectué par l'électro-aimant (30) alimenté et maintenu jusqu'au moment où celui-ci est sans courant.

4. Frein de stationnement selon la revendication 1, 2 ou 3, **caractérisé en ce que** le dispositif de verrouillage (40) présente une compensation de tolérance mécanique qui prend en compte les tolérances des composants de l'actionnement mécanique et du maintien électromagnétique du dispositif de verrouillage (40).

5. Frein de stationnement selon l'une des revendications 1 à 4, **caractérisé**
**en ce que** le cône d'expansion (41) du dispositif de verrouillage (40) est mobile linéairement entre un ressort d'actionnement (46) qui s'appuie axialement contre un piston (20) hydraulique ou pneumatique pour le relâchement du dispositif de freinage, et un ressort de rappel (47) qui s'appuie axialement sur une partie fixe (11) de l'accumulateur à ressort (10),
**en ce que** le cône d'expansion (41) comporte une première surface fonctionnelle cylindrique (42), une deuxième surface fonctionnelle conique (43) adjacente et une troisième surface fonctionnelle au moins approximativement cylindrique (44) avec un diamètre supérieur à celui de la première surface fonctionnelle (42),
**en ce que** le cône d'expansion (41) est relié de manière fixe avec un ancrage (36) de l'électro-aimant (30),
**en ce que** les billes d'encliquetage (45) du dispositif de freinage (40) sont mobiles radialement par rapport au cône d'expansion (41) pour le verrouillage du dispositif de freinage dans l'état non freinant,
**en ce que** le piston (20), lors du relâchement du dispositif de freinage de son état de freinage, pousse mécaniquement le cône d'expansion (41) en direction de l'électro-aimant (30), jusqu'à une position finale dans laquelle l'ancrage (36) s'appuie au moins approximativement sur un aimant de maintien (35) de l'électro-aimant (30), le cône d'expansion (41) amenant les moyens d'encliquetage au-dessus des trois surfaces fonctionnelles (42, 43, 44) du cône d'expansion (41) vers l'extérieur dans un creux du piston (22) en position de verrouillage, de telle sorte que, entre le piston (20) et une partie fixe (11) de l'accumulateur à ressort (10), il existe une complémentarité de forme.

6. Frein de stationnement selon la revendication 5, **caractérisé en ce que** la troisième surface fonctionnelle (44) du cône d'expansion (41) est conique avec un petit diamètre orienté vers la deuxième surface fonctionnelle (43) et un grand diamètre qui n'est qu'un peu plus important que le petit diamètre.

7. Frein de stationnement selon la revendication 4, 5 et 6, **caractérisé en ce que** le piston (20), lors du relâchement du dispositif de freinage de son état de freinage, a un trajet axial plus important que le cône d'expansion (41) jusqu'à la position finale de l'ancrage (36).

8. Frein de stationnement selon l'une des revendications précédentes, **caractérisé en ce que** le dispositif de verrouillage (40) est disposé à l'intérieur d'un alésage longitudinal (21) du piston (20).

9. Frein de stationnement selon l'une des revendications précédentes, **caractérisé en ce que** l'électro-aimant (30) est alimenté en courant pendant l'actionnement du dispositif de verrouillage (40).
